(19) Europäisches Patentamt
European Patent Office
Office européen des brevets

(11) **EP 2 600 096 B1**

(12) **EUROPÄISCHE PATENTSCHRIFT**

(45) Veröffentlichungstag und Bekanntmachung des Hinweises auf die Patenterteilung:
**23.08.2017   Patentblatt 2017/34**

(51) Int Cl.:
*F41G 7/00* *(2006.01)*        *F41G 9/00* *(2006.01)*
*G06N 3/02* *(2006.01)*        *G06N 3/08* *(2006.01)*

(21) Anmeldenummer: **12007982.7**

(22) Anmeldetag: **28.11.2012**

(54) **Bestimmen von Indikatoren für die Trefferwahrscheinlichkeit eines Waffensystems**

Determination of indicators of the hit probability of a weapon system

Détermination d'indicateurs pour la probabilité de rencontre d'un système d'arme

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **02.12.2011   DE 102011119978**

(43) Veröffentlichungstag der Anmeldung:
**05.06.2013   Patentblatt 2013/23**

(73) Patentinhaber: **Airbus Defence and Space GmbH 85521 Ottobrunn (DE)**

(72) Erfinder: **Büttner, Steffen 72760 Reutlingen (DE)**

(74) Vertreter: **Lorenz & Kopf PartG mbB Patentanwälte, LKGLOBAL Brienner Straße 11 80333 München (DE)**

(56) Entgegenhaltungen:
**WO-A2-2011/018656        US-A1- 2009 173 789
US-A1- 2010 094 789        US-B1- 6 658 980**

EP 2 600 096 B1

**Beschreibung**

GEBIET DER ERFINDUNG

Die Erfindung betrifft ein Verfahren, ein Computerprogramm und ein computerlesbares Medium zum Bestimmen eines Indikators für die Trefferwahrscheinlichkeit eines Waffensystems und zum Ermitteln einer Repräsentanz eines Waffensystems, sowie ein Waffensystem.

HINTERGRUND DER ERFINDUNG

Zum Zweck einer optimierten, situationsbedingten Anwendung von Effektoren, in der Regel Waffen, die in ein Waffensystem, wie etwa einem Kampfflugzeug integriert sind, ist es vorteilhaft, wenn das Waffensystem Kenntnis seiner Leistungsfähigkeit besitzt. Aus dieser Kenntnis kann das Waffensystem Anzeigen bzw. Kommandos zum optimierten Einsatz der Effektoren ableiten. Beispielsweise kann dem Piloten eines Kampfflugzeugs mithilfe bestimmter Indikatoren angezeigt werden, in welcher Position und/oder Lage eine Waffe am besten abzufeuern ist, um ein gewähltes Ziel mit hoher Wahrscheinlichkeit zu treffen.

Für das Waffensystem kann dies voraussetzen, auf Basis einer Performance-Repräsentation, d.h. eines Modells der integrierten Leistungsfähigkeit auf einer für gewöhnlich hochdimensionalen Parametrisierung des Szenarios, eine entsprechende Optimierung vorzunehmen und Indikatoren in Echtzeit abzuleiten.

Eine gängige Herangehensweise kann dabei die voneinander unabhängige Abbildung einzelner Indikatoren durch voneinander unabhängige Repräsentations-Funktionen beispielsweise Polynome, sein. Dazu werden beispielsweise Szenario-Parameter, wie etwa die Flughöhe, die Fluglage und die Entfernung zum Ziel ermittelt, in die voneinander unabhängigen Funktionen eingefügt und daraus die Indikatoren berechnet. Dieses Vorgehen kann, vor allem im Falle begrenzter Echtzeitressourcen im Waffensystem und damit endlicher Approximationsgenauigkeit, zu Inkonsistenzen zwischen den abgebildeten Indikatoren und damit zu widersprüchlichen Anzeigen führen.

Des Weiteren sind in diesem Fall die Leistungsdaten, die sich auf den Effektor beziehen, und damit die Repräsentations-Funktionen, normalerweise starr an die entsprechenden Indikatoren gekoppelt. Dies führt in der Regel zu einer gegenseitigen Abhängigkeit der Anzeige der Indikatoren und der Spezifika des Effektors, die die Flexibilität des Waffensystems in Entwicklung und Wartung vermindern können.

Aus US 2010/0094789 A1 ist ein Verfahren bekannt, wobei ein Auftreffgebiet für ein Waffensystem basierend auf einer Mehrzahl von neuronalen Netzwerken berechnet wird.

ZUSAMMENFASSUNG DER ERFINDUNG

Es ist Aufgabe der Erfindung ein einfach zu modifizierendes und einfach zu wartendes Waffensystem bereitzustellen, das effektiv Leistungsdaten seines Effektors verarbeiten kann.

Diese Aufgabe wird durch den Gegenstand der unabhängigen Ansprüche gelöst. Weitere Ausführungsformen der Erfindung ergeben sich aus den abhängigen Ansprüchen und aus der folgenden Beschreibung.

Ein Aspekt der Erfindung betrifft ein Verfahren zum Bestimmen eines Indikators für die Trefferwahrscheinlichkeit eines Waffensystems. Das Waffensystem kann beispielsweise ein Luft-, Land- oder Wasserfahrzeug sein, wie etwa ein Kampfflugzeug, ein Kampfhubschrauber, eine Drohne, ein Panzer oder ein Schiff. Gemäß einer Ausführungsform der Erfindung, umfasst das Verfahren die Schritte von: Ermitteln von (aktuellen) Szenario-Parametern des Waffensystems; Reduzieren einer globalen Repräsentanz des Waffensystems auf eine an einen Indikator angepasste Repräsentanz basierend auf ermittelten Szenario-Parametern; Ermitteln des Indikators (bzw. von Werten für den Indikator) basierend auf der reduzierten Repräsentanz.

Das Ermitteln von Szenario-Parametern, das Reduzieren der globalen Repräsentanz und das Ermitteln des Indikators können dabei in Echtzeit in einer Auswerteeinheit (beispielsweise einem programmierbaren Rechner) im Waffensystem erfolgen.

Ein Indikator kann einen oder mehrere numerische Werte umfassen, die (direkt oder indirekt) Auskunft über die Trefferwahrscheinlichkeit des Waffensystems geben, beispielsweise, ob sich das Ziel in Reichweite des Waffensystems befindet, in welche Richtung und/oder in welche Lage sich das Waffensystem bewegen muss, um die Trefferwahrscheinlichkeit zu erhöhen, oder aber auch die Trefferwahrscheinlichkeit für den Effektor in der aktuellen Situation bzw. dem aktuellen Szenario, die durch die Szenario-Parameter beschrieben wird.

Die Trefferwahrscheinlichkeit kann einen numerischen Wert umfassen, der darüber Auskunft gibt, ob das Waffensystem trifft oder nicht trifft, beispielsweise die Werte 0 und 1. Die Trefferwahrscheinlichkeit muss nicht unbedingt als Prozentzahl gedeutet werden. Der Wert "0" kann beispielsweise so interpretiert werden, dass das Waffensystem wahrscheinlich nicht trifft. Der Wert "1" kann so interpretiert werden, dass das Waffensystem wahrscheinlich trifft. Auf diese Weise kann die Trefferwahrscheinlichkeit nur mit den Werten 0 und 1 angegeben werden.

Gemäß einer Ausführungsform der Erfindung umfassen die Szenario-Parameter eine Position und/oder eine Lage des Waffensystems relativ zu einem zu treffenden Ziel. Ein Szenario-Parameter kann im Allgemeinen eine für das Treffen des Waffenwaffensystem relevante Information umfassen, wie etwa die relative Lage des Waffensystems zum Ziel, die relative Entfernung des Waffensystems zum Ziel, die Flughöhe des Waffensystems (falls es sich beispielsweise um ein Luftfahrzeug handelt). Es ist auch möglich, dass ein Szenario-Parameter sich nicht auf das Bewegungsverhalten des Waffensystems bezieht, sondern auch auf andere Parameter der Umgebung, die sich auf das Waffensystem auswirken können, wie etwa die Umgebungstemperatur, den Umgebungsdruck usw. Szenario-Parameter können beispielsweise aus Sensorinformationen ermittelt werden.

Die Szenario-Parameter des Waffensystems bilden einen (gewöhnlich hochdimensionalen) Parameterraum. Einem ein bestimmtes Szenario repräsentierenden Punkt in diesem Parameterraum kann zugeordnet werden, ob das Waffensystem in diesem Szenario trifft oder nicht. Die Menge der Punkte, bei denen das Waffensystem trifft, bildet dabei in der Regel ein (eventuell auch nicht zusammenhängendes) Teilgebiet dieses Parameterraums.

Eine Repräsentanz des Waffensystems ist nun in der Lage dieses Teilgebiet entweder für den gesamten Parameterraum oder aber auch für einen Unterraum, der durch bestimmte ausgewählte Szenario-Parameter definiert sein kann, zu approximieren. Die globale Repräsentanz kann also ein auf dem Parameterraum aus Szenario-Parametern basierende Funktion sein, die dieses Teilgebiet im Wesentlichen widergibt.

Gemäß einer Ausführungsform der Erfindung approximiert die globale Repräsentanz ein Teilgebiet eines Parameterraums von Szenario-Parametern, wobei das Teilgebiet aus Szenario-Parametern gebildet ist, bei denen das Waffensystem trifft.

Auf diese Weise kann die globale Repräsentanz basierend auf den aktuellen Szenario-Parametern als Eingabewerte einen Ausgabewert (als Trefferwert) erzeugen, der darüber Auskunft gibt, ob das Waffensystem trifft oder nicht. Auf diese Weise kann eine Repräsentanz des Waffensystems von einem Simulationsmodell des Waffensystems abgegrenzt werden, bei dem die Trefferwahrscheinlichkeit iterativ ermittelt wird.

Insbesondere kann eine Repräsentation eine Funktion bzw. Software-Routine umfassen, die den Ausgabewert basierend auf Szenario-Parametern nicht-iterativ berechnet. Diese Funktion kann beispielsweise eine Polynom-Funktion umfassen. Es hat sich jedoch ergeben, dass vor allem künstliche neuronale Netze besonders gut als Repräsentanzen von Waffensystemen geeignet sind.

Gemäß einer Ausführungsform der Erfindung basiert die globale Repräsentanz auf einem künstlichen neuronalem Netz. Ein künstliches neuronales Netz kann eine Mehrzahl von Neuronen, insbesondere mehrere Eingangsneuronen, die jeweils einem Szenario-Parameter zugeordnet sind, und ein Ausgangsneuron, das den Ausgabewert liefert, umfassen, die miteinander verknüpft sind. Die in ein Neuron bzw. einen Knoten über die Verknüpfungen eingehenden Werte können mit Gewichten bewertet werden, um einen neuen Wert zu berechnen, der über eine aus dem Neuron ausgehende Verknüpfung an ein weiteres Neuron übermittelt werden kann.

Gemäß einer Ausführungsform der Erfindung umfasst das Verfahren weiter den Schritt von Erzeugen der globalen Repräsentanz aus Parametern, die in einem Datensatz gespeichert sind. Der Datensatz kann beispielsweise in einer Konfiguration-Phase des Waffensystems mittels einer Simulation des Waffensystems, beispielsweise durch Trainieren eines künstlichen neuronalen Netzes, ermittelt und im Waffensystem gespeichert werden. Während des Einsatzes des Waffensystems kann dann die globale Repräsentanz in Echtzeit aus dem Datensatz rekonstruiert werden. Die Parameter können beispielsweise Informationen über die Struktur und/oder die Gewichte für ein künstliches neuronales Netz umfassen. Es ist aber auch möglich, dass die Parameter Koeffizienten eines Polynoms umfassen.

Gemäß einer Ausführungsform der Erfindung umfasst das Verfahren weiter die Schritte von: Reduzieren der globalen Repräsentanz auf mehrere verschiedenen Indikatoren zugeordnete Repräsentanzen; Ermitteln einer Mehrzahl von Indikatoren basierend auf den reduzierten Repräsentanzen und aktuellen Szenario-Parametern. Mit einer (einzigen) globalen Repräsentanz können also beispielsweise die Teilgebiete des reduzierten Parameterraums für mehrere verschiedene Indikatoren ermittelt werden bzw. alle Szenario-Parameter, die für eine Mehrzahl von Indikatoren relevant sind, ausgewertet werden. Insbesondere können alle Indikatoren basierend auf einem einzigen, in sich konsistenten Datensatz ermittelt werden, so dass die Indikatoren keine voneinander abweichenden Informationen liefern.

Gemäß einer Ausführungsform der Erfindung umfasst das Verfahren weiter den Schritt von Reduzieren der globalen Repräsentanz auf die einem Indikator zugeordnete Repräsentanz durch Festlegen von Eingabewerten der Repräsentanz mit bestimmten Szenario-Parametern, die dem Indikator zugeordnet sind. Eine auf diese Weise reduzierte Repräsentanz kann damit ein Teilgebiet eines Unterraum des globalen Parameterraums approximieren, der auf die verbleibenden Szenario-Parameter, d.h. die Szenario-Parameter, die nicht festgelegt wurden, eingeschränkt ist. Beispielsweise kann eine (beispielsweise als künstliches neuronales Netz ausgebildete) globale Repräsentanz auf die Szenario-Parameter Elevationswinkel und Azimutwinkel reduziert werden, in dem die Eingabewerte (bzw. die entsprechenden Eingangsneuronen) für andere Szenario-Parameter, wie etwa die Geschwindigkeit, durch den entsprechenden aktuell ermittelten Szenario-Parameter festgelegt werden.

Auf diese Weise entsteht eine reduzierte Repräsentanz mit der analog der globalen Repräsentanz aus den nicht festgelegten Eingabewerten, d.h. den verbliebenen Szenario-Parametern, ein Ausgabewert (bzw. ein Trefferwert) ermittelt bzw. berechnet werden kann, der über die Trefferwahrscheinlichkeit des Waffensystems Auskunft geben kann.

Gemäß einer Ausführungsform der Erfindung wird die globale Repräsentanz dadurch reduziert, dass Eingangsneuronen des künstlichen neuronalen Netzes mit aktuellen Szenario-Parametern vorbelegt werden.

Gemäß einer Ausführungsform der Erfindung basiert die reduzierte Repräsentanz auf einem künstlichen neuronalem Netz, das durch Verkleinern eines künstlichen neuronalen Netzes der globalen Repräsentanz erzeugt wurde. Die mit bestimmten Werten festgelegten Eingangsneuronen bzw. deren Eingangsverbindungen können aus dem künstlichen neuronalen Netzes entfernt und in die Gewichte der verbleibenden Neuronen einbezogen werden. Übrig bleibt dann ein künstliches neuronales Netz, dass nur noch die Eingangsneuronen für Szenario-Parameter umfasst, die nicht vorbelegt wurden.

Gemäß einer Ausführungsform der Erfindung umfasst das Verfahren weiter die Schritte von: Approximieren der reduzierten Repräsentanz mit einer Approximationsfunktion und Ermitteln des Indikators aus Funktionsparametern der Approximationsfunktion. Mit anderen Worten kann die Funktion auf dem reduzierten Parameterraum aus Szenario-Parametern, die durch die reduzierte Repräsentanz gebildet ist, grob mithilfe einer weiteren Funktion (der Approximationsfunktion) nachgebildet werden. Die Parameter bzw. Koeffizienten der Approximationsfunktion (die durch die Approximation bestimmt werden) können dann dazu verwendet werden, Indikator-Werte zu berechnen. Mit anderen Worten kann der Indikator auf Koeffizienten bzw. Parameter der Approximationsfunktion basieren.

Durch das Approximieren der reduzierten Repräsentanz und dem Ermitteln der Koeffizienten der Approximationsfunktion kann die Funktion, die durch die reduzierte Repräsentanz definiert wird, invertiert werden, d.h. die Funktion, mit der aus den verbleibenden, nicht festgelegten Szenario-Parametern ein Trefferwert berechnet werden kann.

Durch eine geeignete Wahl der Approximationsfunktion kann auch die Konsistenz von logisch verknüpften Indikatoren erhöht werden. Dies kann dadurch erreicht werden, dass durch die mathematische Formulierung der Approximationsfunktion, Konsistenzkriterien als implizite Zwangsbedingungen in die Approximationsfunktion eingehen. Beispielsweise kann die Approximationsfunktion über ihre Parameter ein Intervall definieren, dass in den reduzierten Parameterraum beim approximieren eingepasst wird. Da das untere Ende des Intervalls immer kleiner als das obere Ende ist, kann beispielsweise für einen Bereichs-Indikator sichergestellt werden, dass dessen minimaler Wert immer kleiner als der maximale Wert ist.

Gemäß einer Ausführungsform der Erfindung wird die Approximationsfunktion durch Trainieren eines (kleinen) künstlichen neuronalen Netzes ermittelt, das nach dem Trainieren eine analoge Ausgabe wie die reduzierte Repräsentanz liefert. Dieses künstliche neuronale Netz kann nur wenige Neuronen umfassen, d.h.

klein sein. Auf diese Weise kann besonders effizient in Echtzeit die reduzierte Repräsentanz mit dem approximierenden künstlichen neuronalen Netz (grob) nachgebildet werden.

Die Approximations-Funktion kann also auf diesem (kleinen) künstlichen neuronalem Netz basieren, das in Echtzeit trainiert wird, um basierend auf den gleichen Eingabewerten wie die reduzierte Repräsentanz eine im Wesentliche gleichen Ausgabe bzw. ähnliche Ausgabe wie die reduzierte Repräsentanz zu erzeugen. Ähnlich können die Ausgabe der reduzierten Repräsentanz und der Approximationsfunktion dann sein, wenn die durch die Ausgabewerte definierten Teilgebiete des Parameterraums ähnlich sind. Beispielsweise können sich die beiden Teilgebiete im Wesentlichen überdecken.

Ein weiterer Aspekt der Erfindung betrifft ein Verfahren zum Ermitteln einer Repräsentanz eines Waffensystems. Dieses Verfahren kann beispielsweise dazu verwendet werden, den Datensatz, aus dem die globale Repräsentanz des Waffensystems in Echtzeit rekonstruiert wird, zu ermitteln.

Gemäß einer Ausführungsform der Erfindung umfasst dieses Verfahren die Schritte von: Simulieren einer Mehrzahl von Szenarien mit einem (Simulations)-Modell des Waffensystems, wobei die Simulation für jedes Szenario als Ergebnis liefert, ob das Waffensystem trifft oder nicht; Trainieren eines künstlichen neuronalen Netzes derart, dass das künstliche neuronale Netz bei der Eingabe eines Szenarios das das durch Simulieren ermittelte Ergebnis für das Szenario im Wesentlichen reproduziert; und Speichern der Struktur des trainierten künstlichen neuronalen Netzes als globale Repräsentanz. Beispielsweise kann die Struktur des künstlichen neuronalen Netzes seine Gewichte, seine Neuronen und/oder seine Verknüpfungen umfassen. Diese Werte können als Parameter einer globalen Repräsentanz des Waffensystems im Waffensystem gespeichert werden.

Auf diese Weise kann die globale Repräsentanz auf einfache Weise durch Rekonstruieren des künstlichen neuronalen Netzes aus der gespeicherten Struktur im Waffensystem in Echtzeit aufgebaut werden.

Weitere Aspekte der Erfindung betreffen ein Computerprogramm, das, wenn es auf einem Prozessor ausgeführt wird, den Prozessor anleitet, die Schritte eines der Verfahren so wie sie obenstehend und untenstehend beschrieben sind, durchzuführen, und ein computerlesbares Medium, auf dem ein derartiges Computerprogramm gespeichert ist. Der Prozessor kann beispielsweise ein Prozessor in einer Auswerteeinheit des Waffensystems sein. Das computerlesbare Medium kann ein nicht-flüchtiger Speicher der Auswerteeinheit sein, beispielsweise ein ROM, ein EPROM, ein FLASH-Speicher oder eine Festplatte, der oder die in das Waffensystem eingebaut ist, und aus dem die Auswerteeinheit das Programm zum Ausführen auf dem Prozessor laden kann.

Es ist jedoch möglich, dass die obenstehend und untenstehend beschriebene Funktionalität, insbesondere die künstlichen neuronalen Netze, auch teilweise oder vollständig als Hardware implementiert sind.

Ein weiterer Aspekt der Erfindung betrifft ein Waffensystem. Das Waffensystem kann einen Effektor, Sensoren zum Ermitteln von Szenario-Parameter und eine Auswerteeinheit, die dazu ausgeführt ist, das Verfahren, so wie es obenstehend und untenstehend beschrieben ist, durchzuführen, umfassen.

Das Waffensystem kann ein unbemanntes Fahrzeug sein und/oder der Indikator kann von der Auswerteeinheit dazu verwendet werden, das Fahrzeug zu steuern. Mit anderen Worten kann die Auswerteeinheit auch eine Steuereinheit sein. Es ist jedoch auch möglich, dass das Fahrzeug ein bemanntes Fahrzeug ist, wobei der Indikator einem Piloten oder Lenker des Fahrzeugs angezeigt wird und ihm Hinweise gibt, wie er das Fahrzeug lenken bzw. den Effektor verwenden sollte.

Zusammenfassend kann aus den beschriebenen Verfahrensschritten ein mehrstufiges Verfahren zum Warten und Betreiben eines Waffensystems gebildet werden. Im ersten Schritt wird ein funktionales Modell der Leistungsfähigkeit auf dem Szenario-Parameterraum, d.h. eine Repräsentanz des Waffensystems ermittelt. Die Repräsentanz wird in das Waffensystem integriert und beinhaltet die für die weiteren Schritte nötige Information, quasi in Form einer impliziten Funktion. Im zweiten Schritt wird diese Information entsprechend des aktuellen Szenarios reduziert, um dann im dritten Schritt eine Interpretation zu erfahren. Letztere Interpretation bestimmt schließlich die Werte der Indikatoren für das aktuelle Szenario, die dann beispielsweise zur Anzeige gebracht werden können.

Dieser erste Schritt erfolgt in der Regel während der Anpassung des Effektors an das Waffensystem zum Ermitteln einer Repräsentanz eines Waffensystems. Der zweite und der dritte Schritt erfolgt in der Regel in Echtzeit während des Betriebs des Waffensystems zum Bestimmen des Indikators oder einer Mehrzahl von Indikatoren.

Durch dieses mehrstufige Verfahren können Effektor abhängige Größen weitestgehend von den berechneten Indikatoren isoliert werden. Dies führt zu besonderer Flexibilität während der Entwicklung sowie der Wartung, da Änderungen auf Seiten der Indikatoren nicht zwangsweise zu einer Anpassung Effektor spezifischer Daten führen und umgekehrt.

Da die Daten der in das Waffensystem integrierten Repräsentanz aus einer einzigen Quelle stammen können und in einem einzigen Datensatz abgelegt werden können, muss im Falle einer Leistungsänderung des Effektors nur dieser eine Datensatz angepasst werden. Inkonsistenzen mit anderen Daten können ausgeschlossen werden.

Die im dritten Schritt zur Anwendung gebrachten Interpretationsalgorithmen können eine zusammenhängende Extraktion logisch verknüpfter Indikatoren ermöglichen, so dass von einer inhärenten Konsistenz des Verfahrens gesprochen werden kann.

Im Folgenden werden Ausführungsbeispiele der Erfindung mit Bezug auf die beiliegenden Figuren detailliert beschrieben.

KURZE BESCHREIBUNG DER FIGUREN

Fig. 1 zeigt schematisch eine Seitenansicht eines Waffensystems gemäß einer Ausführungsform der Erfindung.

Fig. 2 zeigt schematisch eine Anzeige mit Indikatoren gemäß einer Ausführungsform der Erfindung.

Fig. 3 zeigt ein funktionales Modell einer Auswerteeinheit.

Fig. 4 zeigt ein funktionales Modell einer Auswerteeinheit gemäß einer Ausführungsform der Erfindung.

Fig. 5 zeigt ein Flussdiagramm für ein Verfahren zum Bestimmen und Anzeigen eines Indikators gemäß einer Ausführungsform der Erfindung.

Fig. 6 zeigt ein Diagramm, das das Reduzieren eines künstlichen neuronalen Netzes gemäß einer Ausführungsform der Erfindung darstellt.

Fig. 7 zeigt ein Diagramm, dass das Approximieren von Indikatorwerten gemäß einer Ausführungsform der Erfindung beschreibt.

Fig. 8 zeigt ein Flussdiagramm für ein Verfahren zum Ermitteln einer globalen Repräsentanz eines Waffensystems gemäß einer Ausführungsform der Erfindung.

Grundsätzlich sind identische oder ähnliche Teile mit den gleichen Bezugszeichen versehen.

DETAILIERTE BESCHREIBUNG VON AUSFÜHRUNGSBEISPIELEN

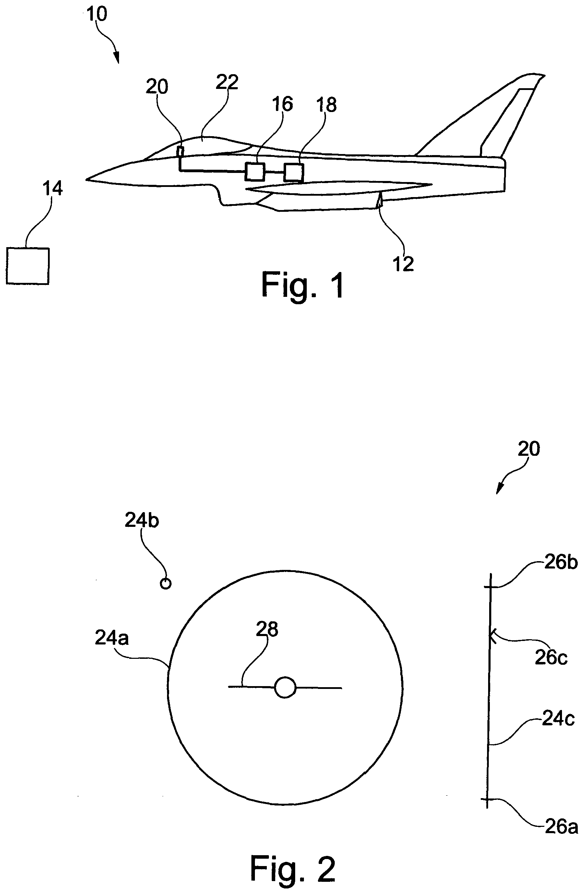

Die Fig. 1 zeigt schematisch ein Waffensystem 10, beispielsweise ein Kampfflugzeug 10. Das Waffensystem 10 könnte jegliche Art von insbesondere militärischen Fahrzeugen 10 umfassen, beispielsweise Luftfahrzeuge, wie etwa Flugzeuge und Hubschrauber, Landfahrzeuge, wie etwa ein Panzer, oder Wasserfahrzeuge, wie etwa ein Schiff.

Das Waffensystem 10 umfasst weiter einen Effektor 12, bei dem es sich um die eigentliche Waffe 12 des Waffensystems 10 handelt. Bei dem Effektor 12 kann es sich beispielsweise um eine Lenkrakete 12 handeln.

Das Waffensystem 10 ist dazu ausgeführt, den Effektor 12 auf ein Ziel 14 zu richten, beispielsweise eine Lenkrakete 12 auf das Ziel 14 abzuschießen. Zur Unterstützung dieser Funktion umfasst das Waffensystem 10 eine Auswerteeinheit 16, die basierend auf aktuellen Szenario-Parametern ermitteln kann, ob das Waffensystem 10 und insbesondere der Effektor 12 das Ziel 14 trifft oder nicht.

Dazu kann die Auswerteeinheit 16 Sensordaten von (in der Figur 1 nur schematisch dargestellten) Sensoren 18 empfangen und zusammen mit weiteren Daten, wie etwa die Position des Ziels 14, verarbeiten, um die Szenario - Parameter zu erzeugen. Bei den Szenario-Parametern kann es sich beispielsweise um die relative Position des Waffensystems 10 zum Ziel 14, um die relative Lage des Waffensystems im Bezug auf das Ziel 10, die relative Geschwindigkeit und weitere Daten, wie etwa die Flughöhe, handeln.

Ein Indikator kann dabei eine Information sein oder Werte um fassen, die darauf hinweisen, wie hoch die Wahrscheinlichkeit ist, dass ein aus gelöster Effektor 12 das Ziel 14 trifft. Auch kann ein Indikator dabei unterstützen, die Szenario-Parameter (durch Steuern des Waffensystems 10) derart abzuändern, dass diese Wahrscheinlichkeit erhöht wird. Szenario-Parameter können beispielsweise dadurch abgeändert werden, dass das Waffensystem 10seine Position und/oder Lage ändert.

Dies kann einerseits dadurch geschehen, dass der oder die Indikatoren einer lenkenden Person angezeigt werden. Beispielsweise können die Indikatoren einem Piloten im Cockpit 22 eines Flugzeugs 10 auf einer Anzeige 20 angezeigt werden. Die lenkende Person bzw. der Pilot kann dann das Waffensystem 10 in eine optimalere Position und/oder Lage manövrieren und die Entscheidung für den Abschuss des Effektors 12 basierend auf den sich verändernden Indikatoren treffen.

Andererseits kann die Auswerteeinheit 16 auch eine Steuereinheit 16 sein, die die ermittelten Indikatoren dazu verwendet, das Waffensystem 10 automatisch zu lenken und/oder die Entscheidung für den Abschuss des Effektors 12 automatisch zu treffen.

Insgesamt kann es sich also bei dem Waffensystem 10 um ein bemanntes Waffensystem 10 handeln. Es ist aber auch möglich, dass das Waffensystem 10 unbemannt ist, wie beispielsweise eine Drohne.

Die Fig. 2 zeigt schematisch eine Anzeige 20, die dazu ausgeführt ist, Indikatoren 24a ,24b und 24c anzuzeigen. Die in der Figur 2 gezeigte Anzeige 20 kann beispielsweise auf eine Frontscheibe des Cockpits 22 projiziert werden.

Zur Orientierung des Piloten weist die Anzeige 20 ein Symbol 28 für die Flugzeugnase auf. Zentriert um das Symbol 28 wird ein Kreis 24a angezeigt, dessen Radius darauf hindeutet, wie hoch die aktuelle Trefferwahrscheinlichkeit für den Effektor 12 ist.

Weiter umfasst die Anzeige 20 ein Steuersymbol 24b, das dem Piloten anzeigt, in welche Richtung er die Nase des Flugzeugs 10 bewegen muss, um die Trefferwahrscheinlichkeit zu erhöhen.

Eine Bereichsanzeige 24c zeigt, ob sich das Waffensystem 10 in einer Entfernung zum Ziel 14 befindet, in der eine hohe Trefferwahrscheinlichkeit besteht. Dazu umfasst die Bereichsanzeige 24c ein Minimum 26a, ein Maximum 26b und eine Ist-Anzeige 26c.

Es ist zu verstehen, dass die in der Fig. 2 gezeigten Indikatoren 24a, 24b, 24c zwar dem Piloten angezeigt werden, unter einem Indikator im Allgemeinen aber lediglich die Werte bzw. Daten verstanden werden können, auf denen die Anzeige beruht.

Zusammenfassend ist das Waffensystem 10 dazu ausgeführt, in Kenntnis der Leistungsfähigkeit seines Effektors 12, entsprechende Indikatoren 24a, 24b, 24c oder auf den Indikatoren beruhende Kommandos zu erzeugen, die es ermöglichen das Waffensystem 10 aus seinem momentanen Zustand in einen für die Anwendung des Effektors 12 optimierten bzw. optimalen Zustand zu überführen. Dies ist indirekt dadurch möglich, dass das Waffensystem 10 einem Fahrzeugführer bzw. Piloten die Indikatoren 24a, 24b, 24c anzeigt und direkt dadurch, dass es die Indikatoren 24a, 24b, 24c zur Steuerung des Waffensystems 10 verwendet.

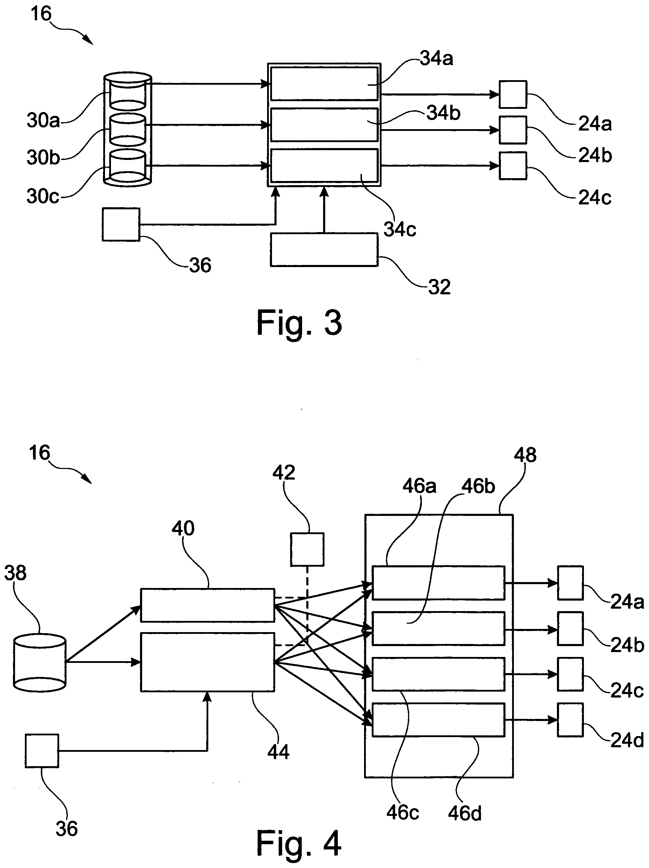

Die Fig. 3 zeigt ein funktionales Modell einer Auswerteeinheit 16 zur Modellierung der jeweiligen Indikatoren 24a, 24b, 24c anhand unabhängiger, paralleler Berechnungszweige, die auf einer auf Polynomen 34a, 34b, 34c beruhenden Approximation beruhen.

In der Auswerteeinheit 16 sind Datensätze 30a, 30b, 30c gespeichert, aus denen ein Rekonstruktor 32 (bzw. eine Rekonstruktor-Funktion 32) jeweils ein Polynom bzw. Polynomen-Funktion) 34a, 34b, 34c rekonstruieren kann. Die Daten in den Datensätzen 30a, 30b, 30c können beispielsweise die Koeffizienten der Polynome 34a, 34b, 34c umfassen. Die Auswerteeinheit 16 setzt dann die aktuellen Szenario-Koeffizienten 36, die beispielsweise auf den Sensordaten der Sensoren 18 beruhen, in die Polynome 34a, 34b, 34 ein und wertet sie aus, um die Werte für den entsprechenden Indikator 24a, 24b, 24c zu berechnen.

Eine Variation in den Leistungsdaten des Effektors 12, die beispielsweise durch einen anderen Typ von Effektor 12 bedingt sein können, erfordert in der Regel die Neuberechnung sämtlicher Datensätze30a, 30b, 30c, d.h. mindestens eines Datensatzes 30a, 30b, 30c pro Indikator 24a, 24b, 24c. Im Rahmen der endlichen Genauigkeit eines Echtzeitsystems können sich die Fehler der einzelnen Approximationen außerdem in einer inkonsistenten Anzeige 20 auswirken.

Die Fig. 4 zeigt ein funktionales Modell einer Auswerteeinheit 16, die basierend auf einem einzelnen Datensatz 38 die Indikatoren 24a, 24b, 24c, 24d ermittelt. Ein Rekonstruktor 40 (bzw. eine Rekonstruktor-Funktion 40) rekonstruiert eine globale Repräsentanz 42 aus dem Datensatz 38, die mithilfe eines Konfigurators (bzw. einer Konfigurator-Funktion) 44 unter Zuhilfenahme von aktuellen Szenario-Parameter 36 in eine Repräsentanz 44a, 44b, 44c, 44d umgewandelt wird, die auf den entsprechenden Indikator 24a, 24b, 24c, 24d zugeschnitten ist.

Die Werte für die einzelnen Indikator 24a, 24b, 24c, 24d werden dann mit einem Extraktor (bzw. einer Extraktor-Funktion) 48 aus der entsprechenden reduzierten Repräsentanz 46a, 46b, 46c, 46d ermittelt.

Im Allgemeinen kann die globale Repräsentanz 42 eine Funktion sein, die die verschiedenen Szenario-Parameter 36 als Eingabewerte hat und die einen Ausgabewert ausgibt, der darauf hindeutet, ob das Waffensystem 10 bzw. der Effektor 12 trifft oder nicht. Der Ausgabewert kann beispielsweise eine Zahl zwischen 0 und 1 sein. Die globale Repräsentanz 42 kann ein künstliches neuronales Netz 42 sein. In dem Datensatz 38 können die Gewichte des neuronalen Netzes 42 und zusätzlich dessen Struktur gespeichert sein, mit denen der Rekonstruktor 40 das neuronale Netz 42 erzeugen kann. Genauso können die reduzierten Repräsentanzen 46a, 46b, 46c, 46d künstliche neuronale Netze 46a, 46b, 46c, 46d sein, die auf Teilnetzen des globalen neuronalen Netzes 42 beruhen, die durch Reduzieren des globalen neuronalen Netzes 42 ermittelt wurden.

Im Allgemeinen kann jede der reduzierten Repräsentanzen 46a, 46b, 46c, 46d analog der globalen Repräsentanz 42 eine Funktion sein, die (einige wenige) Szenario-Parameter 36 als Eingabewerte hat und einen Ausgabewert entsprechend der globalen Repräsentanz 42 ausgibt. Beispielsweise kann eine reduzierte Repräsentanz 46a, 46b, 46c, 46d aus der globalen Repräsentanz 42 erzeugt werden, indem bestimmte Eingangsgrößen mit aktuellen Szenario-Parametern 36 vorbelegt werden.

Der Extraktor 48 kann dann für jede reduzierte Repräsentanz 46a, 46b, 46c, 46d eine (einfache) Funktion approximieren, die bei gleichen Eingangsgrößen im Wesentlichen denselben Ausgabewert wie die entsprechende Repräsentanz erzeugt. Die Parameter bzw. Koeffizienten dieser Approximationsfunktion können dann als Indikatorwerte verwendet werden bzw. der entsprechenden Indikator 24a, 24b, 24c, 24d kann basierend auf diesen Koeffizienten oder Parametern ermittelt werden.

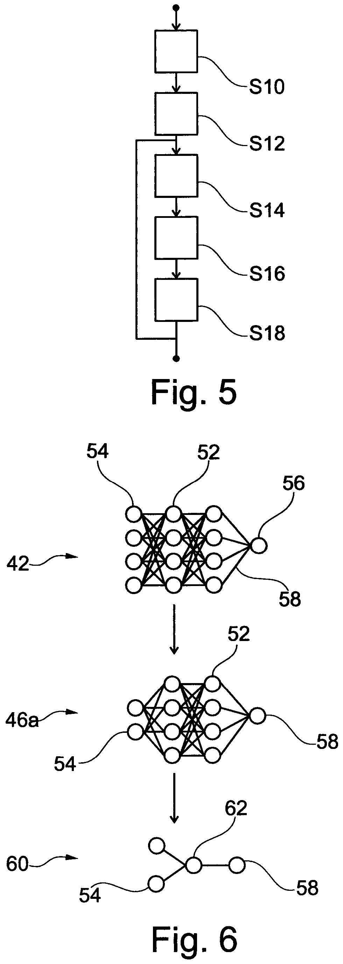

Fig. 5 zeigt ein Flussdiagramm für ein Verfahren zum Bestimmen und Anzeigen eines Indikators. Das in der Figur 5 dargestellte Verfahren kann automatisch mit einer Auswerteeinheit 16 des Waffensystems 10 in Echtzeit ausgeführt werden. Beispielsweise kann die Auswerteeinheit 16 einen Prozessor aufweisen, auf dem ein Computerprogramm ausgeführt wird, das dazu in der Lage ist, die im Folgenden beschriebenen Schritte auszuführen.

In Schritt S10 werden Szenario-Parameter 36, wie etwa eine Flughöhe des Waffensystems 10, eine Fluglage des Waffensystems 10 und/oder eine relative Entfernung zum Ziel 22 ermittelt. Diese kann beispielsweise basierend auf Sensordaten von den Sensoren 18 und auf weiteren Daten, wie etwa die Position des gewünschten Ziels 14, die beispielsweise vom Piloten des Waffensystems 10 eingegeben wurde, geschehen.

In Schritt S12 wird die globale Repräsentanz 42 des Waffensystems 10 erzeugt. Beispielsweise kann der Rekonstruktor 40 Koeffizienten oder Parameter einer Funktion aus dem Datensatz 38 laden und diese Funktion rekonstruieren.

Wie bereits gesagt, kann für die Modellierung der globalen Repräsentanz 42 ein künstliches neuronales Netze 42 eingesetzt werden. In den hochdimensionalen Parameterräumen, die sich für eine adäquate Modellierung eines komplexen Waffensystems 10 ergeben, lassen sich durch Training eines solchen künstlichen neuronalen Netzes 42 zu einem Leistungs-Klassifikator, d.h. einer globalen Repräsentanz, implizite Zusammenhänge zwischen den maßgeblichen Einflussgrößen, d.h. den Szenario-Parametern 36 des Waffensystems darstellen. Diese so gewonnene globale Repräsentanz 42 kann als alleinige Datenquelle für die Generierung der Indikatoren 24a, 24b, 24c, 24d dienen. Das künstliche neuronalen Netz 42 kann dabei vom Rekonstruktor 40 aus dem Datensatz 38 aufgebaut werden, in dem die Gewichte und/oder die Struktur des neuronalen Netzes gespeichert sein können.

Die Modellierung des Datensatzes 38 durch einen generischen, vom Typ des Effektors 12 unabhängigen Rekonstruktor-Algorithmus 40 ermöglicht die Generalisierung des im Echtzeitsystem verwendeten Datenformats und die Implementierung eines entsprechend generischen Rekonstruktors 40, der dann in Verbindung mit dem effektorspezifischen Datensatz 38 die Leistungsfähigkeit des Waffensystems 10 funktional modellieren kann.

Fig. 6 zeigt schematisch ein neuronales Netz 42, das von einem Rekonstruktor 40 erzeugt worden ist. Das neuronale Netz 42 kann eine Mehrzahl von Knoten 52 bzw. Neuronen 52, Eingangsknoten 54 und einen Ausgangsknoten 56 umfassen. Die Knoten 52 sind mittels Verbindungen 58 verbunden, die gewichtet sein können.

Im Schritt S14 der Fig. 5 wird die globale Repräsentanz des Waffensystems 10 mithilfe der im Schritt S10 ermittelten Szenario-Parameter 36 reduziert.

Um aus der globalen Repräsentanz 42 in Echtzeit Indikatoren 26a, 26b, 26c, 26d abzuleiten, d.h. spezifische Fragestellungen in Bezug auf ein aktuelles Szenario zu klären, kann die globale Repräsentanz 42 durch Vorkonfiguration (durch den Konfigurator 44) auf eine szenariospezifische, einen Unterraum abbildende Funktion reduziert werden.

Fig. 6 veranschaulicht diesen Schritt im Falle der Anwendung eines neuronalen Netzes 42. Das neuronale Netz 46a ist dadurch entstanden, dass das neuronale Netz 42 verkleinert wurde. Dazu wurden die Eingabewerte zweier Eingangsneuronen 54 festgelegt und die auf diese Weise auch festgelegten Ausgabewerte dieser Neuronen auf die anderen Neuronen 52 und deren Gewichte verteilt.

Durch das Reduzieren der globalen Repräsentanz 42 bzw. das Verkleinern des künstlichen neuronalen Netzes 42 auf das künstliche neuronale Netz 46a kann dieser Schritt auch zu einer Laufzeitoptimierung bei der Berechnung der Indikatoren 24a, 24b, 24c führen, da hier von einer wiederholten Evaluation der reduzierten Repräsentanz 46a beim Approximieren im folgenden Schritt S16 ausgegangen werden muss.

Im Schritt S16 der Fig. 5 wird eine reduzierte Repräsentanz 46a, 46b, 46c, 46d dazu verwendet, eine Approximationsfunktion 62 zu erzeugen, aus deren Funktionsparametern dann Indikatorwerte erzeugt werden können.

Beispielsweise kann ein kleines künstliches neuronales Netz 60 wie es etwa in der Fig. 6 dargestellt ist, darauf trainiert werden, aus den gleichen Eingabewerten wie das künstliche neuronale Netz 46a in etwa die gleichen Ausgabewerte zu erzeugen. Das kleine künstliche neuronales Netz 60 weist dazu die gleiche Anzahl Eingangsknoten 54 wie das künstliche neuronale Netz 46a und einen einzigen Ausgangsknoten 58 auf, hat aber im Gegensatz zum künstlichen neuronalen Netz 46a nur einen einzigen Knoten, der die Aufgabe hat, für die Approximationsfunktion 62 einen Best-Fit (d.h. eine optimale Passung) für die Parameter der Approximationsfunktion 62 zu finden.

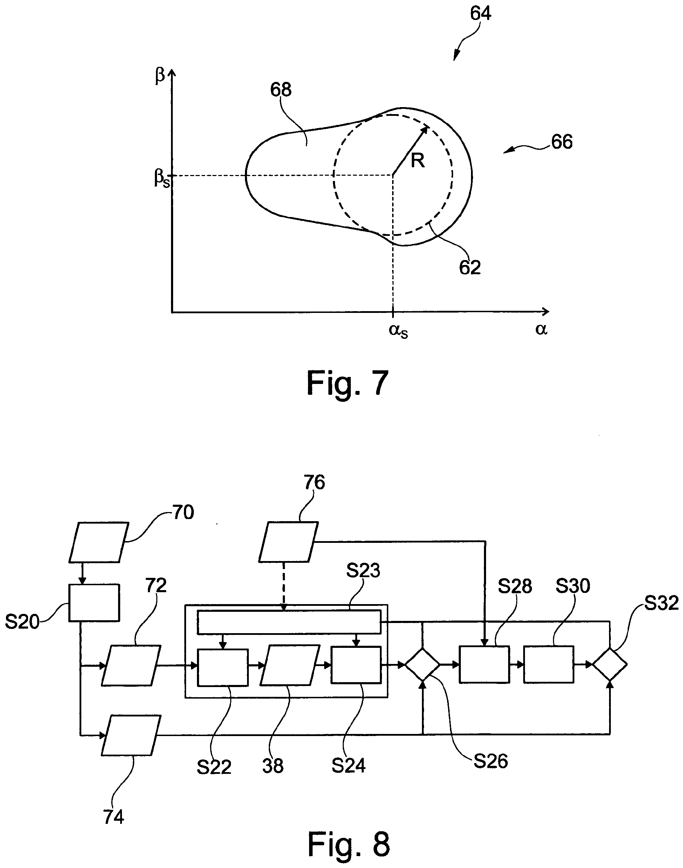

Fig. 7 zeigt ein Diagramm, mit dem das Approximieren von Indikatorwerten, beispielsweise mit dem kleinen künstlichen neuronales Netz 60 beispielhaft beschrieben werden soll.

Die Fig. 7 zeigt einen Querschnitt bzw. Unterraum 64 durch einen Parameterraum 66 von Szenario-Parametern, wobei der Unterraum 64 von dem Elevationswinkel β und dem Azimutwinkel α aufgespannt wird. Der Azimutwinkel α kann der Winkel zwischen der aktuellen Bewegungsrichtung des Waffensystems 10 und einer senkrechten Ebene durch das anvisierte Ziel 14 sein. Der Elevationswinkel β kann der Winkel zwischen der aktuellen Bewegungsrichtung des Waffensystems 10 und dem Horizont sein.

Der globale Parameterraum 66 wird durch weitere Szenario-Parameter aufgespannt, die beim Beispiel der Fig.7 festgelegt sind. Der Parameterraum 66 als auch der Unterraum 64 weisen ein Teilgebiet 68 auf, innerhalb dessen das Waffensystem 10 trifft. Beispielsweise gibt die globale Repräsentanz 42, die die Szenario-Parameter eines Punkts innerhalb des Teilgebiets 68 als Eingangswerte erhält, den Ausgangswert 1 aus. Außerhalb des Teilgebiets 68 gibt die globale Repräsentanz 42 beispielsweise den Wert 0 aus. Gleiches gilt beispielsweise für die reduzierte Repräsentanz 46a, die den Azimutwinkel α und den Elevationswinkel β als Eingangswerte erhält.

Das Teilgebiet 68 kann durch die Menge aller Punkte, bei denen die globale Repräsentanz 42 bzw. die reduzierte Repräsentanz 46a den Wert 1 ausgibt, definiert werden.

Das Teilgebiet 68 bzw. die reduzierte Repräsentanz 46a wird nun beispielsweise durch die Kreisfunktion 62 als Approximationsfunktion 62 approximiert, die mit der Formel

$$f(h, \alpha) = sqrt(\ (\beta - \beta_s)^2 + (\alpha - \alpha_s)^2\ ) - r$$

beschrieben werden kann. Die Parameter der Funktion 62 sind dabei der optimale Elevationswinkel $\beta_s$, der optimale Azimutwinkel $\alpha_s$ und der Radius r des Kreises.

Das Approximieren bzw. der bestmögliche Fit kann dadurch erfolgen, dass die durch die Funktion 62 definierte Kreisscheibe einen möglichst großen Radius r aufweist und vollständig im Teilgebiet 68 liegt. Mit einem iterativen Verfahren kann beispielsweise ein bestmöglicher Fit der Approximationsfunktion 62 an die vorkonfigurierte bzw. reduzierte Repräsentanz 46a erzeugt werden. Beispielsweise kann das kleine künstliche neuronale Netz 60 darauf trainiert werden, die gleichen Ausgabewerte wie das reduzierte künstliche neuronale Netz 46a zu erzeugen, wobei das einzig zwischengeschaltete Neuron des kleinen Netzes 60 dabei seine Eingabewerte basierend auf der Funktion 62 verknüpft.

Mit den so gewonnenen Werten der Parameter $\beta_s$, $\alpha_s$ und r der Approximationsfunktion 62 können dann die gesuchten Werte für einen oder mehrere Indikatoren 24a, 24b berechnet werden. Beispielsweise kann die Position des Steuersymbols 24b auf der Differenz des aktuellen Elevationswinkels und des optimalen Elevationswinkels $\beta_s$ sowie der Differenz des aktuellen Azimutswinkels und des optimalen Azimutswinkels $\alpha_s$ basieren. Der Radius des Kreises 24a kann auf dem Parameter r der Approximationsfunktion 62 basieren.

Die mit der Approximationsfunktion 62 gewonnen Indikatoren 24a, 24b sind auch miteinander logisch konsistent, da die Wahl der Kreisfunktion sicherstellt, dass $\alpha_s$ und $\beta_s$ immer relativ stark zentriert im Teilgebiet 68 angeordnet sind. Liegen $\alpha_s$ und $\beta_s$ nahe am Rand des Teilgebiet 68 (weil das Teilgebiet 68 beispielsweise einen geringen Durchmesser in eine Richtung hat), wird auch r entsprechend klein, so dass auch in diesem Fall ein schlüssiges Gesamtbild entstehen kann.

Im Schritt S18 der Fig. 5 werden die ermittelten Indikatoren 24a, 24b beispielsweise im Cockpit 12 des Waffensystems 10 angezeigt.

Die Schritte S14 bis S18 können für eine Mehrzahl von Indikatoren wiederholt werden.

Da jeder der Indikatoren 24a, 24b, 24c, 24d aus der gleichen globalen Repräsentanz 42 bzw. dem gleichen Datensatz 38 gewonnen wird, sind die Indikatoren 24a, 24b, 24c, 24d untereinander konsistent.

Je nach verwendetem Algorithmus kann das Verfahren unabhängig von der Form der für die Modellierung der globalen Repräsentanz 42 zur Verfügung stehenden Datengrundlage 38 eingesetzt und dieser Prozess vollständig automatisiert werden.

Die Fig. 8 zeigt ein Flussdiagramm für ein Verfahren zum Ermitteln einer globalen Repräsentanz 42 eines Waffensystems 10.

Im Schritt S20 wird aus einer Vielzahl von Szenario-Parametern (beispielsweise Geschwindigkeit, Position, Lage) durch Simulation bestimmt, ob das Waffensystem 10 trifft oder nicht. Dazu wird ein Simulationsmodell 70 benutzt, dass beispielsweise vom Waffenhersteller des Effektors 12 geliefert werden kann. Die Ergebnisse der Simulation sind eine Vielzahl von Punkten im Parameterraum, für die ermittelt wurde, ob das Waffensystem 10 trifft oder nicht. Diese Datengrundlage kann entweder als Lerndaten 72 oder als Vergleichsdaten 74 Verwendung finden.

Im Schritt S22 wird mithilfe eines Generators (der beispielsweise ein künstliches neuronales Netz trainiert) der Datensatz 38 erzeugt, der mit einem Rekonstruktor 40 im Schritt S24 wieder in ein künstliches neuronales Netz 42 überführt werden kann.

Im Schritt S23 können der Generator und der Rekonstruktor 40 aufgrund von operationellen Anforderungen, beispielsweise an das Waffensystem 10, modifiziert und verbessert werden.

Im Schritt S26 werden die Ausgabe des durch den Rekonstruktor 40 erzeugten künstlichen neuronalen Netzes 42 und die Vergleichsdaten 74 verglichen, um zu überprüfen, ob die Ausgabe des künstlichen neuronalen Netzes 42 hinreichend mit den simulierten Daten übereinstimmt.

In diesem Fall werden der Rekonstruktor 40, der Datensatz 38 sowie die Indikatoren 24a, 24b, 24c, 24d im Schritt S28 im Waffensystem 10 implementiert (unter Berücksichtigung von operationalen Anforderungen) und im Schritt S30 mit der Hardware des Waffensystems 10 getestet. Dabei wird im Schritt S32 überprüft, ob die erzeugten Indikatoren 24a, 24b, 24c, 24d hinreichend genau mit den Vergleichsdaten 74 übereinstimmen.

Stimmen die Ausgabe des künstlichen neuronalen Netzes 42 nicht genügend mit den Vergleichsdaten 74 überein, können der Generator und der Rekonstruktor 40 im Schritt S23 angepasst werden.

Insgesamt wird also die aus dem Simulationsmodell 70 gewonnene Datengrundlage in einen Lerndatensatz 72 und einen Testdatensatz 74 geteilt, sodass nach Generierung der Repräsentanz 42 ein direkter Abgleich mit dem Modell 70 erfolgen kann. Die Schritte S20, S22, S23, S24 erfordern noch keine Integration in das Waffensystem 10 und erlauben die Verifizierung des effektorspezifischen Datensatzes 38 im Schritt S26 in Isolation. Die Verifikation des erzeugten Datensatzes 38 ist im Allgemeinen unabhängig von operationellen Anforderungsänderungen 76, die beispielsweise die Anzeige der Indikatoren 24a, 24b, 24c betreffen können.

Zur Verifikation der im Schritt S28 in das Waffensystem implementierten Echtzeit-Algorithmen erfolgt der Abgleich der Indikatoren 24a, 24b 24c, 24d mit dem Vergleichsdaten 74. Auch dieser Schritt kann als eigenständiger Verifikationsprozess aufgefasst werden und muss bei einer auf die globale Repräsentanz 42 beschränkten Anpassung nicht wiederholt werden. Die Implementierung bzw. das Modifizieren der Indikatoren 24a, 24b, 24c kann damit unabhängig gemacht werden vom Erstellen bzw. Modifizieren des Datensatzes 38.

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

**Patentansprüche**

1. Verfahren zum Bestimmen eines Indikators (24a, 24b, 24c, 24d) für die Trefferwahrscheinlichkeit eines Waffensystems (10), das Verfahren umfassend die Schritte:

   Ermitteln von Szenario-Parametern (36) des Waffensystems (10);
   Reduzieren einer globalen Repräsentanz (42) des Waffensystems (10) auf eine an einen Indikator (24a, 24b, 24c, 24d) angepasste Repräsentanz (46a, 46b, 46c, 46d) basierend auf ermittelten Szenario-Parametern, wobei die globale Repräsentanz auf einem künstlichen neuronalen Netz (42) basiert und ein Teilgebiet (68) eines Parameterraums von Szenario-Parametern approximiert, das aus Szenario-Parametern gebildet ist, bei denen das Waffensystem (10) trifft, und wobei die reduzierte Repräsentanz (46a) auf einem künstlichen neuronalen Netz basiert, das
   durch Verkleinern des künstlichen neuronalen Netzes der globalen Repräsentanz (42) erzeugt wird, in dem Eingangsneuronen (54) des künstlichen neuronalen Netzes (42) der globalen Repräsentanz (42) mit dem Indikator (24a, 24b, 24c, 24d) zugeordneten Szenario-Parametern vorbelegt werden;
   Ermitteln des Indikators (24a, 24b, 24c, 24d) basierend auf der reduzierten Repräsentanz.

2. Verfahren nach Anspruch 1,
   wobei die Szenario-Parameter (36) eine Position und/oder eine Lage des Waffensystems relativ zu einem zu treffenden Ziel umfassen.

3. Verfahren nach einem der vorhergehenden Ansprüche, weiter umfassend den Schritt:

   Erzeugen der globalen Repräsentanz (42) aus Parametern, die in einem Datensatz (38) gespeichert sind.

4. Verfahren nach einem der vorhergehenden Ansprüche, weiter umfassend die Schritte:

> Reduzieren der globalen Repräsentanz (42) auf mehrere verschiedenen Indikatoren (24a, 24b, 24c, 24d) zugeordnete Repräsentanzen (46a, 46bb, 46c, 46d);
> Ermitteln einer Mehrzahl von Indikatoren (24a, 24b, 24c, 24d) basierend auf den reduzierten Repräsentanzen und aktuellen Szenario-Parametern (36).

**5.** Verfahren nach einem der vorhergehenden Ansprüche, weiter umfassend die Schritte:

> Approximieren der reduzierten Repräsentanz (46a) mit einer
> Approximationsfunktion (62),
> Ermitteln des Indikators (24a, 24b, 24c, 24d) aus Funktionsparametern der Approximationsfunktion (62).

**6.** Verfahren nach einem der vorhergehenden Ansprüche,
wobei die Approximationsfunktion (62) durch Trainieren eines künstlichen neuronalen Netzes (60) ermittelt wird, das nach dem Trainieren eine analoge Ausgabe wie die reduzierte Repräsentanz (46a) liefert.

**7.** Computerprogramm zum Bestimmen eines Indikators (24a, 24b, 24c, 24d) für die Trefferwahrscheinlichkeit eines Waffensystems (10), das, wenn es auf einem Prozessor ausgeführt wird, den Prozessor anleitet, die Schritte des Verfahrens nach einem der Ansprüche 1 bis 6 durchzuführen.

**8.** Computerlesbares Medium, auf dem ein Computerprogramm nach Anspruch 7 gespeichert ist.

**9.** Waffensystem (10), umfassend:

> einen Effektor (12),
> Sensoren (18) zum Ermitteln von Szenario-Parameter (36);
> ein Auswerteeinheit (16), die dazu ausgeführt ist, das Verfahren nach einem der Ansprüche 1 bis 6 durchzuführen.

**Claims**

**1.** Method for determining an indicator (24a, 24b, 24c, 24d) for the hit probability of a weapon system (10), the method comprising the steps:

> Determining scenario parameters (36) of the weapon system (10);
> Reducing a global representation (42) of the weapon system (10) to a representation (46a, 46b, 46c, 46d) which is adapted to an indicator (24a, 24b, 24c, 24d) based on determined scenario parameters, wherein the global representation is based on an artificial neuronal net (42) and approximates a partial area (68) of a room of parameters of scenario parameters, which partial area is built of scenario parameters at which the weapon system (10) hits, and wherein the reduced representation (46a) is based on an artificial neuronal net which is generated by reduction of the artificial neuronal net of the global representation (42), in that entry neurons (54) of the artificial neuronal net (42) of the global representation (42) are pre-allocated with scenario parameters assigned to the indicator (24a, 24b, 24c, 24d);
> Determining the indicator (24a, 24b, 24c, 24d) based on the reduced representation.

**2.** Method according to claim 1,
wherein the scenario parameters (36) comprise a position and/or a location of the weapon system relative to a target to be hit.

**3.** Method according to one of the preceding claims, further comprising the step:

> Generating the global representation (42) of parameters which are stored in a dataset (38).

**4.** Method according to one of the preceding claims, further comprising the steps:

> Reducing the global representation (42) to multiple representations (46a, 46bb, 46c, 46d) which are assigned to different indicators (24a, 24b, 24c, 24d);
> Determining a plurality of indicators (24a, 24b, 24c, 24d) based on the reduced representation and the actual scenario parameters (36).

**5.** Method according to one of the preceding claims, further comprising the steps:

> Approximating the reduced representation (46a) with an approximation function (62);
> Determining the indicator (24a, 24b, 24c, 24d) based on function parameters of the approximation function (62).

**6.** Method according to one of the preceding claims wherein the approximation function (62) is determined by training of an artificial neuronal net (60) which, after training, delivers an analog output like the reduced representation (46a).

**7.** Computer program for determining an indicator (24a, 24b, 24c, 24d) for the hit probability of a weapon system (10) which, if it is executed on a processor, instructs the processor to execute the steps of the method according to one of the claims 1 to 6.

8.  Computer readable medium on which the computer program according to claim 7 is stored.

9.  Weapon system (10), comprising:

    an effector (12);
    sensors (18) for determining scenario parameters (36);
    an evaluation unit (16) which is configured to execute the method according to one of the claims 1 to 6.

**Revendications**

1.  Procédé de détermination d'un indicateur (24a, 24b, 24c, 24d) pour la probabilité de succès d'un système d'arme (10), le procédé comprenant les étapes:

    Détermination de paramètres de scénario (36) du système d'arme (10);
    Réduction d'une représentation globale (42) du système d'arme (10) à une représentation (46a, 46b, 46c, 46d), qui est adaptée à un indicateur (24a, 24b, 24c, 24d), la représentation adaptée est déterminée en fonction des paramètres de scénario, dans lequel la représentation globale est basée sur un réseau neuronal artificielle (42) et qui approxime une zone partielle (68) d'un espace de paramètre de paramètres de scénario, dont la zone partielle est constitué de paramètres de scénario, pour lesquels le système d'arme (10) frappe, et dans lequel la représentation globale réduite (46a) est basée sur un réseau neuronal artificielle, qui est produit par la réduction du réseau neuronal artificielle de la représentation globale (42), dans ce des neurones d'entrée (54) du réseau neuronal artificielle (42) de la représentation globale (42) sont pré-affectés avec les paramètres de scénario qui sont attribués à l'indicateur (24a, 24b, 24c, 24d).
    Détermination de l'indicateur (24a, 24b, 24c, 24d) basé sur la représentation réduite.

2.  Procédé selon la revendication 1, dans lequel les paramètres de scénario (36) comprennent une Position et/ou un emplacement du système d'arme relative à une cible à frapper.

3.  Procédé selon l'une quelconque des revendications précédentes, comprenant en outre l'étape consistant à:

    Production de la représentation globale (42) de paramètres, qui sont stockés dans un ensemble de données (38).

4.  Procédé selon l'une quelconque des revendications précédentes, comprenant en outre les étapes:

    Réduction de la représentation globale (42) à des multiple représentations (46a, 46bb, 46c, 46d), qui sont attribuées à des indicateurs différents (24a, 24b, 24c, 24d);
    Détermination d'une pluralité d'indicateurs (24a, 24b, 24c, 24d) qui sont basés sur les représentations réduite et paramètres de scénario (36) actuelles.

5.  Procédé selon l'une quelconque des revendications précédentes, comprenant en outre les étapes:

    Approximation de la représentation réduite (46a) avec une fonction d'approximation (62),
    Détermination des indicateurs (24a, 24b, 24c, 24d) basés sur des paramètres de fonction de la fonction d'approximation (62).

6.  Procédé selon l'une quelconque des revendications précédentes,
    dans lequel la fonction d'approximation (62) est déterminée par entraînement d'un réseau neuronal artificielle(60) qui, après l'entraînement, fournit une sortie analogue comme la représentation réduite (46a).

7.  Programme d'ordinateur destiné à déterminer un indicateur (24a, 24b, 24c, 24d) pour la probabilité de succès d'un système d'arme (10), qui, lorsqu'il est exécuté sur un processeur, charge le processeur, d'exécuter les étapes du procédé selon l'une quelconque des revendications 1 à 6.

8.  Un support lisible par ordinateur sur lequel un programme d'ordinateur selon la revendication 7 est stocké.

9.  Système d'arme (10), comprenant:

    un effecteur (12),
    capteurs (18) pour déterminer des paramètres de scénario (36);
    une unité d'évaluation (16) qui est configuré pour exécuter le procédé selon l'une quelconque des revendications 1 à 6.

Fig. 1

Fig. 2

Fig. 3

Fig. 4

## Fig. 5

## Fig. 6

Fig. 7

Fig. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20100094789 A1